# EUROPÄISCHE PATENTSCHRIFT

(11) **EP 1 502 881 B1**
(45) Veröffentlichungstag und Bekanntmachung des Hinweises auf die Patenterteilung: **05.09.2007**
(21) Anmeldenummer: 04103481.0
(22) Anmeldetag: 21.07.2004
(51) Int. Cl.: B65G 7/02, F16M 7/00

(54) **Positionierhilfe und Verfahren zur Unterstützung der Ausrichtung von schweren Maschinen**
Positioning assistance and procedure for the support of the adjustment of heavy machines
L'aide de mise en position et procédure de soutien de l'alignement des appareils lourds

(30) Priorität: 01.08.2003 DE 10336039
(43) Veröffentlichungstag der Anmeldung: 02.02.2005
(73) Patentinhaber: Heidelberger Druckmaschinen Aktiengesellschaft, 69115 Heidelberg (DE)
(72) Erfinder: Ganter, Udo, 71691 Freiberg am Neckar (DE)

(56) Entgegenhaltungen:
- WO-A-00/56638
- DE-A- 10 017 507
- US-A- 4 036 345

## Beschreibung

Die Erfindung betrifft eine Positionierhilfe zur Unterstützung der Ausrichtung von schweren Maschinen gemäß des Oberbegriffs des Anspruchs 1 sowie ein Verfahren mit einer Positionierhilfe zur Unterstützung der Ausrichtung von schweren Maschinen.

Typischerweise werden Vorrichtungen der genannten Art eingesetzt, um schwere Maschinen auf eine Position z. B. in einer Werkhalle zu bringen, in der die schwere Maschine arbeiten soll. Dabei versteht man unter schwerer Maschine eine Maschine, die so schwer ist, dass sie von einem Menschen nur mit Mühe oder gar nicht gehoben werden kann, etwa eine Werkzeugmaschine. Häufig müssen solche schweren Maschinen nicht eine spezielle Position im Raum einnehmen, sondern vielmehr eine Position relativ zu einer anderen Maschine. Dies ist besonders häufig in der Weiterverarbeitung innerhalb der grafischen Industrie verbreitet, wo sich beispielsweise an eine Falzmaschine verschiedene weitere Maschinen wie weitere Falzstationen, Auslagevorrichtungen, Sammelvorrichtungen oder Verpackungsmaschinen usw. anschließen.

Die Position von Maschinen, wie z. B. Pressen, Werkzeug- oder Druckmaschinen, wird in der Regel nicht mehr verändert, sobald sie ihre endgültige Position erreicht haben. Zur Positionierung kommen hier Hilfsmittel, wie z. B. Kräne, Seilwinden, Rollen, Schlitten und Hebeböcke zum Einsatz, wie aus der WO 0056638 bekannt. Im Gegensatz dazu müssen im Bereich der Weiterverarbeitung häufiger Konfigurationswechsel durchgeführt werden, z. B. abhängig vom Format der zu verarbeitenden Bogen, dem endgültigen Aussehen des Produkts oder auch der Anzahl der produzierten Produkte, etwa bei der Wahl eines geeigneten Anlegers oder Auslegers.

Daher weisen derartige schwere Maschinen in der Regel Stellfüße und ein Bewegungssystem auf, das es erlaubt, die schwere Maschine bei Bedarf in andere Positionen zu bringen. Dies wird im Stand der Technik meist durch ein Paar Bockrollen, die an zwei Ecken der schweren Maschine angebracht sind, und jeweils eine fluchtende steife Achse besitzen und einem Paar Lenkrollen, die an den gegenüberliegenden Ecken der schweren Maschine angebracht sind, und jeweils eine bewegliche Achse aufweisen erreicht. Dieses aus diesen vier Rollen bestehende Bewegungssystem kann entweder ein- und ausgefahren werden, oder aber die Stellfüße sind ein bzw. ausfahrbar, um die Maschine positionsgenau zu fixieren.

Diese Ausgestaltung eines Bewegungssystems ist einerseits zweckmäßig, da die Lenk- und Bockrollen keine besonders hohen Erfordernisse an die Beschaffenheit des Untergrunds stellen, und eine Positionierung der Vorrichtung mit etwas Übung zulassen. Allerdings ist das Rangieren durch die steifen Bockrollen wenig komfortabel, da nur sehr große Radien gefahren werden können, und ein erheblicher Weg nach vorne und hinten zurückgelegt werden muss, um eine Verschiebung in Achsrichtung der Bockrollen zu erzielen. Andererseits wäre das Rangieren einer schweren Maschine, die auf zwei Paar Lenkrollen rollt, praktisch unmöglich.

Es besteht daher Bedarf an einer Positionierhilfe für schwere Maschinen in der Ebene, die die Nachteile des Standes der Technik nicht aufweist.

Es ist daher die Aufgabe der Erfindung, eine verbesserte Positionierhilfe zur Unterstützung der Ausrichtung von schweren Maschinen sowie ein entsprechendes Verfahren zur Unterstützung der Ausrichtung von schweren Maschinen mittels einer solchen Positionierhilfe bereitzustellen.

Diese Aufgabe wird mit Hilfe der erfindungsgemäßen Positionierhilfe zur Unterstützung der Ausrichtung von schweren Maschinen mit den im Anspruch 1 genannten Merkmalen gelöst sowie mit einem Verfahren zur Unterstützung der Ausrichtung von schweren Maschinen mittels einer solchen Positionierhilfe gemäß Anspruch 5.

Dementsprechend handelt es sich bei der vorliegenden Erfindung also um eine Positionierhilfe zur Ausrichtung von schweren Maschinen, wobei die Vorrichtung an der Unterseite der schweren Maschine angebracht ist und wahlweise in Kontakt mit dem Boden gebracht werden kann, wobei die Positionierhilfe aus wenigstens einem Ausrichtelement besteht, wobei das wenigstens eine Ausrichtelement derart ausgestaltet ist, dass die schwere Maschine in der Ebene schwimmend gelagert ist, wenn die Positionierhilfe in Kontakt mit dem Boden steht. Hier versteht man unter einer schwimmenden Lagerung eine Lagerung, die eine leichtgängige Rotation und Translation der schweren Maschine in der Ebene erlaubt. Eine schwimmende Lagerung wird zum Beispiel durch vier Kugeln erreicht, die frei drehbar gelagert sind und die einzigen Berührungspunkte zum Boden darstellen. Dadurch, dass eine schwimmende Lagerung einer Vorrichtung dieser zwei Freiheitsgrade zur Bewegung der Maschine in der Ebene lässt und keine Zwangsbedingungen auflegt kann die schwere Maschine mit Leichtigkeit in der Ebene rotiert und verschoben werden, um ihre optimale Position zu erreichen, z.B. in Ausrichtung zu einer weiteren Maschine. Außerdem ist erfindungsgemäß die Positionierhilfe wahlweise in Kontakt mit dem Boden bringbar. Das bedeutet, dass die Positionierhilfe mittels Verstellmöglichkeiten bei Bedarf, nämlich z. B. um die Feinjustage der Maschine durchzuführen, ausgefahren wird und danach wieder einfahrbar ist. Die Integration der Positionierhilfe in den Aufbau der schweren Maschine vereinfacht den Vorgang der Feinjustage im Gegensatz zum Einsatz separater Positionier-Hilfsmittel wesentlich

In der Ausgestaltung der erfinderischen Vorrichtung weist wenigstens ein Ausrichtelement ein erstes Gehäuse auf, in dem eine Kugelrolle angebracht ist, vorteilhafterweise sind alle Ausrichtelemente baugleich. Unter einer Kugelrolle versteht man eine auf einer Vielzahl von kleineren Tragkugeln gelagerte größere Laufkugel, beispielsweise aus gehärtetem Stahl. Derartige Kugelrollen finden sich häufig in ortsfesten Unterlagen, über die schwere Lasten gerollt werden, die selbst keinen Antrieb aufweisen wie z. B. aus der US 4,036,345 bekannt. In dieser Erfindung sind Kugelrollen bevorzugt, die über Kopf angebracht sind, bei denen die Kugelrolle nach unten unbedeckt ist, und die Tragrollen oberhalb der Kugelrolle angebracht sind. In der vorliegenden Erfindung werden die Kugelrollen also mitgeführt, da sie fest mit dem ersten Gehäuse verbunden sind. Die Konstruktion von Kugelrollen ermöglicht auch bei schweren Lasten ein müheloses Verschieben und Drehen in beliebige Richtungen in der Ebene.

Problematisch daran ist es, dass die Kugelrollen nur auf sehr festen Oberflächen laufen können, da eine Bewegung nicht mehr möglich ist, wenn sie im kopfständigen Einbau aufgrund des Gewichts der Maschine in die Unterlage einsinken. Es ist daher in einer weiteren Ausführungsform vorgesehen, Platten die eine gehärtete Oberseite aufweisen, bereitzustellen, die unter die Positionierhilfen gelegt werden, bevor die Positionierhilfen abgesenkt werden. Im Rahmen der Abmessungen dieser Platten lässt sich dann die schwimmende Lagerung der schweren Maschine erzeugen, mit den beschriebenen Vorteilen in der Beweglichkeit der schweren Maschine. Diese Anwendung ist dann vorteilhaft, wenn beispielsweise größere Distanzen in einer Richtung zurückgelegt werden müssen, insbesondere entlang der Achse der Bockrollen. In einem Anwendungsbeispiel ist es zum Beispiel denkbar, eine schwere Maschine auf diese Weise um mehr als eine halbe Maschinenbreite parallel zu der Mittellinie zwischen den Bockrollen zu verschieben. Als Platten bieten sich hier gehärtete Stahlplatten an, die vorteilhafterweise zur verbesserten Handhabung auf Holzplatten befestigt sind.

In der Ausgestaltung der erfinderischen Vorrichtung weist die Positionierhilfe zudem und ein zweites Gehäuse auf, in dem eine Laufplatte angeordnet ist, die auf der der Kugelrolle abgewandten Seite die Kontaktfläche zum Boden darstellt. Auf diese Weise führt die Positionierhilfe die Laufplatte, mit der die Kugelrolle die schwimmende Lagerung der schweren Maschine erzeugt, stets mit, so dass darauf verzichtet werden kann, Laufplatten zu bevorraten und diese möglicherweise mühsam unter die Positionierhilfen legen zu müssen.

In einer Weiterentwicklung dieser vorteilhaften Ausgestaltung der erfinderischen Vorrichtung sind erstes und zweites Gehäuse miteinander mit Federn verbunden, die eine automatische Zentrierung der Laufplatte zur Kugelrolle erzeugen, wenn die Laufplatte nicht von der Kugelrolle belastet wird. Damit die schwere Maschine mit ausgefahrener Positionierhilfe bewegt werden kann, ist klar, dass die Laufplatte ortsfest bleibt, was sich bei ausgefahrener Positionierhilfe schon allein durch das Gewicht der schweren Maschine ergibt. Die schwimmende Bewegung der Vorrichtung ist daher nur auf der Größe der Laufplatte möglich. Damit die Positionierhilfe aber nicht auffällig unter der schweren Maschine hervorlugt, weist die Laufplatte vorteilhafterweise gerade solche Abmessungen auf, wie sie typischerweise bei einer Feinpositionierung einer gattungsgemäßen schweren Maschine erforderlich ist. Durch die Ausgestaltung mit den Federn zentriert sich die Laufplatte stets neu zur Kugelrolle, wenn die Positionierhilfe wieder eingefahren wird. Auf diese Weise ist es möglich, im Raupengang, also durch Ausfahren der Positionierhilfe, Verschieben der Maschine zur Laufplatte in der gewünschten Richtung, Einfahren der Positionierhilfe, Ausfahren der Positionierhilfe mit erneut zentrischer Laufplatte usw., auch größere Strecken mühelos zurückzulegen, unabhängig von der Beschaffenheit des Untergrunds, solange der Untergrund im Wesentlichen eben ist. Vorteilhafterweise besteht die Laufplatte aus gehärtetem Stahl.

In einer vorteilhaften Ausgestaltung der erfinderischen Vorrichtung sind die Ausrichtelemente vermittels von pneumatischen Zylindern höhenverstellbar. Andere, äquivalente Höhenverstellungsmittel sind ebenfalls denkbar, wie z. B. Spindeln usw.

Bevorzugte Ausführungsformen der erfindungsgemäßen Vorrichtung werden im folgenden unter Bezugnahme auf die Zeichnung im einzelnen näher beschrieben. Es zeigen in schematischer Darstellung:
- Fig. 1: eine schematische Seitenansicht einer Ausführungsform eines Ausrichtelements der erfindungsgemäßen Vorrichtung;
- Fig. 2: eine schematische Draufsicht einer Ausführungsform einer schweren Maschine mit der erfindungsgemäßen Vorrichtung
- Fig. 3: eine schematische Seitenansicht einer Ausführungsform einer schweren Maschine mit der erfindungsgemäßen Vorrichtung bei eingefahrener Positionierhilfe;
- Fig. 4: eine schematische Seitenansicht einer Ausführungsform einer schweren Maschine mit der erfindungsgemäßen Vorrichtung bei ausgefahrener Positionierhilfe.

Die Figuren zeigen schematische Ansichten der erfindungsgemäßen Vorrichtung. Weitere, allgemein bekannte und zum Betrieb der Vorrichtung erforderliche Antriebs- und/oder Führungsmittel, Steuerungsmittel und Kurvenscheiben sind nur schematisch dargestellt bzw. werden nur in allgemeiner Form beschrieben.

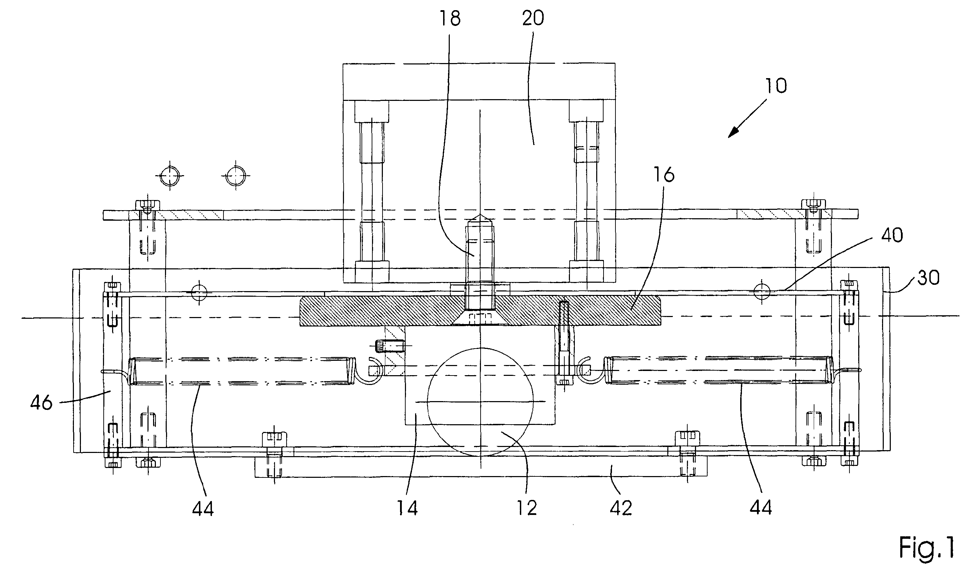

In Fig. 1 ist ein Ausrichtelement 10 der Positionierhilfe einer schweren Maschine 100 gezeigt. Ein Pneumatikzylinder 20, der an der schweren Maschine 100 befestigt ist, ermöglicht über den Kolben 18 und eine entsprechende, nicht gezeigte, dem Fachmann bekannte Steuerung, das Ausrichtelement 10 in der Höhe zu verstellen. Der Kolben 18 endet in einer Befestigungsplatte 16, an deren dem Kolben 18 abgewandten Seite das Kugelrollengehäuse 14 der Laufkugel 12 angebracht ist. Innerhalb des Kugelrollengehäuses 14 befindet sich eine Vielzahl nicht gezeigter Tragkugeln, gegen die sich die Laufkugel 12 abstützt, und die eine freie Rotation der Laufkugel 12 in alle Richtungen erlaubt. Das Kugelrollengehäuse 14 verhindert auch, dass die Laufkugel 12 nach unter herausfällt.

Ebenfalls an der Befestigungsplatte 16 ist ein erstes Gehäuse 30 angeordnet, das einerseits einen Schutz der Laufkugel 12 darstellt. Zudem ist innerhalb des ersten Gehäuses 30 ein zweites Gehäuse 40 angeordnet. Das zweite Gehäuse 40 liegt lose auf der Befestigungsplatte 16 auf und weist in diesem Bereich eine Aussparung auf, so dass ein Verschieben von erstem Gehäuse 30 zu dem zweiten Gehäuse 40 von dem Kolben 18 ungehindert möglich ist. Vermittels radial angebrachter Federn 44, die einerseits an dem Kugelrollengehäuse 14 und andererseits an Stangen 46 an dem zweiten Gehäuse 40 angebracht sind, wird das zweite Gehäuse 40 relativ zu der Laufkugel 12 zentriert. Unterhalb der Laufkugel 12 ist an dem zweiten Gehäuse 40 eine Laufplatte 42 aus gehärtetem Stahl angebracht, auf der die Laufkugel 12 ohne einzusinken laufen kann, wenn die Positionierhilfe abgesenkt ist. In diesem Fall bildet die Unterseite der Laufplatte 42 die Kontaktfläche zu dem Boden 110.

In einer einfacheren, nicht gesondert dargestellten Ausführungsform fehlen der Positionierhilfe das zweite Gehäuse 40 mit den darin angeordneten Elemente, insbesondere den Federn 44 und der Laufplatte 42. Diese Ausführungsform erfordert zur schwimmenden Lagerung zusätzliche nicht gezeigte Laufplatten, die unter die Positionierhilfe gelegt werden. Diese nicht gezeigten Laufplatten, z. B. Holzplatten mit einer Laufschicht aus gehärtetem Stahl, könne dabei praktisch beliebige Formen annehmen, z. B. in Abhängigkeit zu dem Weg, den die schwere Maschine 100 schwimmend gelagert zurücklegen soll.

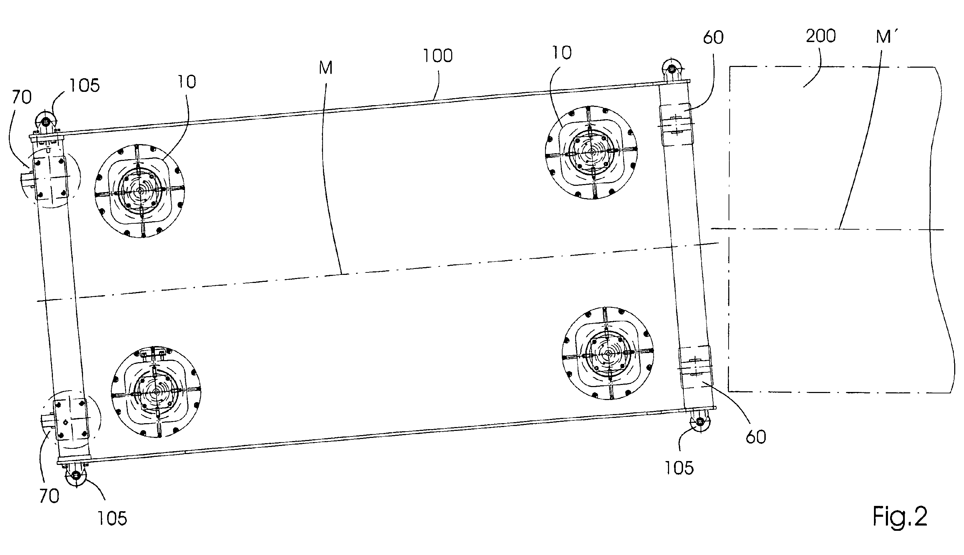

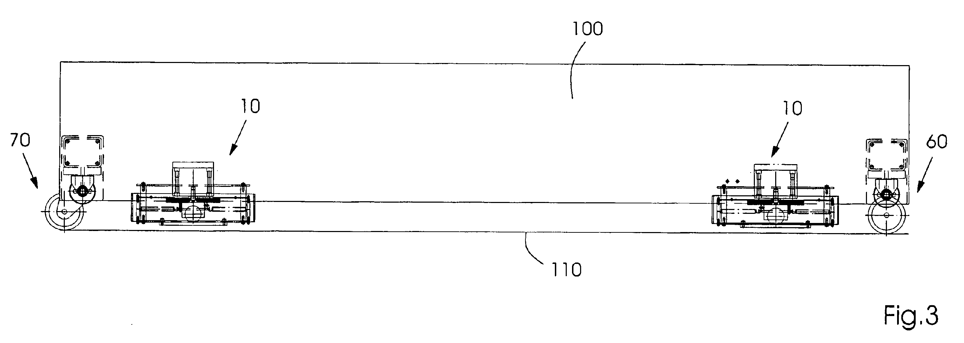

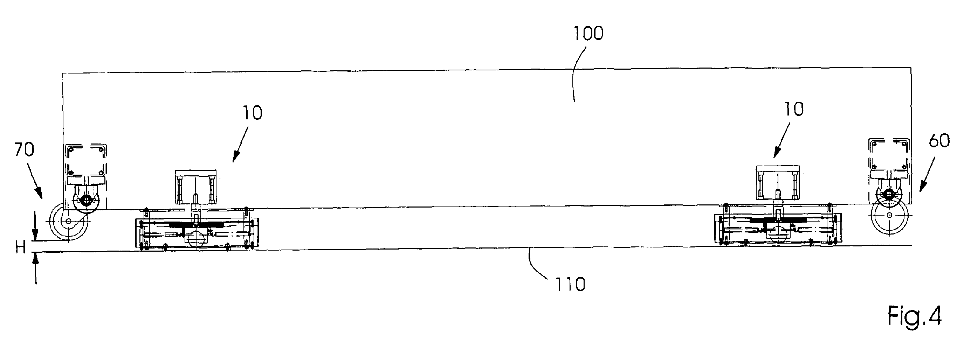

In Fig. 2 ist eine schwere Maschine 100 gezeigt, die zu einer bereits positionierten weiteren Vorrichtung 200 positioniert werden soll. Insbesondere sollen die Mittellinien M, M' der beiden Vorrichtungen 100, 200 zueinander ausgerichtet werden. Die schwere Maschine 100 ist, wie es z. B. im Bereich der Weiterverarbeitung in der grafischen Industrie üblich ist, mit Stellfüßen 105 ausgerüstet und einem ersten Bewegungssystem 60, 70, bestehend aus einem Paar Bockrollen 60 und einem Paar Lenkrollen 70. Lenkrollen 70 und Bockrollen 60 sind mittels Hohlenverstellvorrichtungen ein- und ausfahrbar, um die schwere Maschine 100 auf die Stellfüße 105 auf den Boden 110 (vergleiche Fig. 3 und 4) abzustellen, bzw. anzuheben. Wahlweise können auch die Stellfüße 105 mittels Höhenverstellvorrichtungen ein- und ausfahrbar sein. Für die eben genannten Vorrichtungen, also z. B. Falzmaschinen, Anleger, Ausleger, Stapler, Banderoliervorrichtungen, Dreischneider, Zusammentragemaschinen, Kreuzleger usw., ist es typisch, dass sie in Abhängigkeit von einem Produkt in unterschiedlicher Weise zusammengestellt werden müssen. Dadurch ist es nicht ungewöhnlich, dass die Vorrichtungen relativ häufig ihren Standort wechseln. Es ist daher Stand der Technik, diese Vorrichtungen mit einem genannten ersten Bewegungssystem 60, 70 auszurüsten, um die Positionsveränderungen durchführen zu können. Da Bockrollen 60 allerdings nur Bewegungen in eine Richtung zulassen und die Zwangsbedingungen für die Beweglichkeit der Lenkrollen erzeugen, ist ein Rangieren, besonders parallel zu der Mittellinie M der schweren Maschine 100 mühsam und erfordert häufiges Hin- und Herschieben, bis die Maschinen 100, 200 ordentlich zueinander ausgerichtet sind.

In den Fig. 3 und 4 ist daher das Verfahren dargestellt, wie hier die erfindungsgemäße Positionierhilfe vorteilhaft zum Einsatz kommt. Zusätzlich zu dem ersten Bewegungssystem, mit dem sich die schweren Maschinen 100 z. B. hervorragend von einer Halle in die nächste schieben lassen, weist die schwere Maschine 100 Ausrichtelemente 10 auf, die entweder wie in Fig. 3 in einem eingefahrenen Zustand oder wie in Fig. 4 in einem ausgefahrenen Zustand sind wobei die Lenkrollen 70 und die Bockrollen 60 wie in Fig. 4 dargestellt die Haftung zum Boden verlieren und um eine Höhe H vom Boden 110 abgehoben werden, so dass nunmehr die schwere Maschine 100 schwimmend auf der Positionierhilfe gelagert ist und bequem in die vorgesehene Position gebracht werden kann. Da die Verschiebung der schweren Maschine 100 vermittels der Positionierhilfe durch die Größe der Laufplatten 42 beschränkt ist, muss gegebenenfalls die Positionierhilfe mehrmals aus- und eingefahren werden, um die gewünschte Verschiebung im Raupengang zu realisieren.

Die Positionierhilfe kann gegebenenfalls nicht gezeigte Sensoren aufweisen, die Unterseite der Positionierhilfe überwachen, so dass verhindert werden kann, dass sich beispielsweise ein Körperteil unter der Laufplatte befindet, bevor die Positionierhilfe abgesenkt wird.

In der dargestellten Ausführungsform sind vier Ausrichtelemente 10 für die schwere Maschine 100 vorgesehen, die Zahl kann aber davon abweichen, es ist sogar denkbar, das die Positionierhilfe nur ein einziges Ausrichtelement 10 aufweist, beispielsweise zwischen den beiden Bockrollen 60, und zur Feinjustage lediglich die Bockrollen 60 abgehoben werden. Für größere schwere Maschinen 100 ist es denkbar, sechs oder mehr der Positionierhilfen vorzusehen, um eine gleichmäßige Verteilung der Lasten zu ermöglichen. Durch die schwimmende Lagerung der Positionierhilfen ist der Anzahl der Ausrichtelemente 10 keine obere Grenze gesetzt.

Die erfindungsgemäße Vorrichtung findet besonderen Einsatz in der Weiterverarbeitung innerhalb der grafischen Industrie, ist aber prinzipiell für jede Vorrichtung, die in der Ebene bewegt werden soll, geeignet.

### Liste der Bezugszeichen

- 10: Ausrichtelement
- 12: Kugelrolle
- 14: Kugelrollengehäuse
- 16: Befestigungsplatte
- 18: Kolben
- 20: Pneumatikzylinder
- 30: erstes Gehäuse
- 40: zweites Gehäuse
- 42: Laufplatte
- 44: Feder
- 46: Stange
- 60: Bockrolle
- 70: Lenkrolle
- 100: schwere Maschine
- 105: Stellfuß
- 110: Boden
- 200: weitere Vorrichtung

- M: Mittellinie der schweren Maschine
- M': Mittellinie der weiteren Vorrichtung
- H: Stützhöhe

## Patentansprüche

1. Positionierhilfe zur Ausrichtung von schweren Maschinen (100), wobei die Positionierhilfe an der Unterseite der schweren Maschine angebracht ist und wahlweise in Kontakt mit dem Boden (110) gebracht werden kann, wobei die Positionierhilfe aus wenigstens einem Ausrichtelement (10) besteht und wobei das Ausrichtelement (10) derart ausgestaltet ist, dass eine schwimmende Lagerung der schweren Maschine (100) bewirkt wird, wenn die Positionierhilfe in Kontakt mit dem Boden (110) steht,
**dadurch gekennzeichnet,**
**dass** die Positionierhilfe ein erstes äußeres Gehäuse (30) aufweist, in dem eine Kugelrolle (12, 14) angebracht ist, und ein zweites inneres Gehäuse (40), in dem eine Laufplatte (42) angeordnet ist, wobei die Laufplatte (42) auf der der Kugelrolle (12, 14) abgewandten Seite die Kontaktfläche zum Boden (110) darstellt, wenn die Positionierhilfe in Kontakt mit dem Boden (110) steht.

2. Positionierhilfe nach dem Anspruch 1
**dadurch gekennzeichnet,**
**dass** erstes Gehäuse (30) und zweites Gehäuse (40) miteinander mit Federn (44) verbunden sind, die eine automatische Zentrierung der Laufplatte (42) zur Kugelrolle (12, 14) erzeugen, wenn die Laufplatte (42) nicht von der Kugelrolle (12, 14) belastet wird.

3. Positionierhilfe nach einem der Ansprüche 1 bis 2
**dadurch gekennzeichnet,**
**dass** die Laufplatte (42) aus gehärtetem Stahl besteht.

4. Positionierhilfe nach einem der Ansprüche 1 bis 3
**dadurch gekennzeichnet,**
**dass** die Ausrichtelemente (10) vermittels von pneumatischen Zylindern (20) höhenverstellbar sind.

5. Verfahren zum Ausrichten von schweren Maschinen (100) mit einem ersten Bewegungssystem (60, 70) und einer Positionierhilfe gemäß einem der Ansprüche 1 bis 4 mit den Schritten:
a) Grobes Positionieren der schweren Maschine (100) mit dem ersten Bewegungssystem (60, 70),
b) Ausfahren der Positionierhilfe, so dass das erste Bewegungssystem (60, 70) den Kontakt mit dem Boden (110) verliert und nunmehr schwimmend gelagert ist;
c) Freies Rotieren und Verschieben der schweren Maschine (100) auf der Positionierhilfe;
d) Absenken der schweren Maschine (100) auf unbewegliche Stellfüße (105), sobald die gewünschte Position der schweren Maschine (100) erreicht ist.

6. Verfahren nach Anspruch 5 mit den zusätzlichen Schritten zwischen Schritt c) und d):
c2) Absenken der schweren Maschine (100) auf unbewegliche Stellfüße (105) oder das erste Bewegungssystem (60, 70);
c3) Wiederholen der Schrittfolge b, c und c2) bis Schritt d) erreicht werden kann.

7. Schwere Maschine (100),
**dadurch gekennzeichnet,**
**dass** sie ein erstes Bewegungssystem (60, 70) für grobe Positionierung aufweist, sowie eine Positionierhilfe gemäß einem der Ansprüche 1 bis 4, die wahlweise in Kontakt mit dem Boden gebracht werden kann.

8. Schwere Maschine nach Anspruch 7
**dadurch gekennzeichnet,**
**dass** es sich bei der schweren Maschine (100) um eine Weiterverarbeitungsmaschine im Bereich der grafischen Industrie handelt.

## Claims

1. Positioning aid for aligning heavy machines (100), wherein the positioning aid is arranged on the underside of the heavy machine, can be brought into contact with the floor (110) as required, and consists of at least one alignment element (10) that is constructed in such a way that the heavy machine (100) is caused to be floatingly supported when the positioning aid is in contact with the floor,
**characterized in**
**that** the positioning aid comprises a first outer housing (30), in which a roller ball (12, 14) is provided, and a second inner housing (40), in which a runner plate (42) is arranged, the runner plate (42) forming a contact surface with the floor (110) on the side facing away from the roller ball (12, 14) when the positioning aid is in contact with the floor (110).

2. Positioning aid according to Claim 1,
**characterized in**
**that** first housing (30) and second housing (40) are connected to each other by springs (44) that cause an automatic centring of the runner plate (42) relative to the roller ball (12, 14) when the runner plate (42) is not subject to loading from the roller ball (12, 14).

3. Positioning aid according to one of Claims 1 to 2,
**characterized in**
**that** the runner plate (42) is made of hardened steel.

4. Positioning aid according to one of Claims 1 to 3,
**characterized in**
**that** the aligning elements (10) are adjustable in height by means of pneumatic cylinders (20).

5. Method of aligning heavy machines (100) by means of a first movement system (60, 70) and a positioning aid according to one of Claims 1 to 4
including the steps of
a) approximate positioning of the heavy machine (100) by means of the first movement system (60, 70)
b) extending the positioning aid so that the first movement system (60, 70) loses contact with the floor (100) and is now floatingly supported;
c) freely rotating and displacing the heavy machine (100) on the positioning aid;
d) lowering the heavy machine (100) onto immobile adjustment feet (105) as soon as the desired position of the heavy machine (100) is reached.

6. Method according to claim 5 including the following additional steps between steps c) and d):
c2) lowering the heavy machine (100) onto immobile adjustment feet (105) or onto the first movement system (60, 70);
c3) repeating the sequence of steps b, c, and c2) until step d) can be achieved.

7. Heavy machine (100),
**characterized in**
**that** it includes a first movement system (60, 70) for approximate positioning and a positioning aid according to any one of claims 1 to 4, which can be brought into contact with the floor as required.

8. Heavy machine according to Claim 7,
**characterized in**
**that** the heavy machine (100) is a further processing machine in the field of the graphic industry.

## Revendications

1. Dispositif d'aide au positionnement pour l'alignement de machines lourdes (100), où le dispositif d'aide au positionnement est fixé sur la partie inférieure de la machine lourde et peut être placé, au choix, en contact avec le sol (110), où le dispositif d'aide au positionnement se compose d'au moins un élément d'alignement (10) et où l'élément d'alignement (10) est configuré de manière telle, qu'un logement flottant de la machine lourde (100) soit mis en oeuvre, lorsque le dispositif d'aide au positionnement est en contact avec le sol (110), **caractérisé en ce que** le dispositif d'aide au positionnement présente un premier carter extérieur (30) dans lequel est fixée une roulette (12, 14), et un deuxième carter intérieur (40) dans lequel est disposée une plaque de roulement (42), où la plaque de roulement (42) représente, sur le côté placé à l'opposé de la roulette (12, 14), la surface de contact par rapport au sol (110), lorsque le dispositif d'aide au positionnement est en contact avec le sol (110).

2. Dispositif d'aide au positionnement selon la revendication 1, **caractérisé en ce qu'**un premier carter (30) et un deuxième carter (40) sont reliés entre eux par des ressorts (44) qui produisent un centrage automatique de la plaque de roulement (42), par rapport à la roulette (12, 14), lorsque la plaque de roulement (42) n'est pas chargée par la roulette (12, 14).

3. Dispositif d'aide au positionnement selon la revendication 1 ou 2, **caractérisé en ce que** la plaque de roulement (42) est en acier durci.

4. Dispositif d'aide au positionnement selon l'une quelconque des revendications 1 à 3, **caractérisé en ce que** les éléments d'alignement (10) sont réglables en hauteur au moyen de vérins pneumatiques (20).

5. Procédé d'alignement de machines lourdes (100), comprenant un premier système de mouvement (60, 70) et un dispositif d'aide au positionnement selon l'une quelconque des revendications 1 à 4, comprenant les étapes consistant :
- a) à positionner grossièrement la machine lourde (100) avec le premier système de mouvement (60, 70),
- b) à sortir le dispositif d'aide au positionnement, de sorte que le premier système de mouvement (60, 70) perde le contact avec le sol (110) et soit logé, à présent, de façon flottante ;
- c) à faire tourner librement et à déplacer la machine lourde (100) sur le dispositif d'aide au positionnement ;
- d) à abaisser la machine lourde (100) sur des pieds de réglage fixes (105), dès que la position souhaitée, concernant la machine lourde (100), est atteinte.

6. Procédé selon la revendication 5 comprenant les étapes supplémentaires à réaliser entre les étapes c) et d) et consistant :
- c2) à abaisser la machine lourde (100) sur des pieds de réglage fixes (105) ou sur le premier système de déplacement (60, 70) ;
- c3) à répéter la succession d'étapes b), c) et c2) jusqu'à ce que l'on puisse atteindre l'étape d).

7. Machine lourde (100), **caractérisée en ce qu'**elle présente un premier système de mouvement (60, 70) pour un positionnement grossier, ainsi qu'un dispositif d'aide au positionnement selon l'une quelconque des revendications 1 à 4, qui peut être placé, au choix, en contact avec le sol.

8. Machine lourde selon la revendication 7,
**caractérisée en ce que**, concernant la machine lourde (100), il s'agit d'une machine de transformation utilisée dans le secteur de l'industrie graphique.
